# EUROPEAN PATENT SPECIFICATION

(11) **EP 3 546 286 B1**
(45) Date of publication and mention of the grant of the patent: **30.03.2022**
(21) Application number: 18208002.8
(22) Date of filing: 23.11.2018
(51) Int. Cl.: B60P 3/077

(54) **TRANSVERSE MEMBER FOR THE LOADING DECK OF VEHICLE TRANSPORTERS**
QUERTRÄGER FÜR DAS LADEDECK VON FAHRZEUGTRANSPORTERN
ÉLÉMENT TRANSVERSAL PLATE-FORME DE CHARGEMENT DE TRANSPORTEURS DE VÉHICULES

(30) Priority: 28.03.2018 IT 201800002249 U; 18.04.2018 IT 201800004674
(43) Date of publication of application: 02.10.2019
(73) Proprietor: Officina Meccanica Migliore Livio, 10026 Santena (Torino) (IT)
(72) Inventor: MIGLIORE, Mr. Livio, I-10026 Santena (Torino) (IT)
(74) Representative: Buzzi, Franco

(56) References cited:
- EP-A1- 3 345 787
- CN-A- 101 817 338
- FR-A1- 2 725 946
- US-A- 3 888 191
- US-A1- 2014 248 102

## Description

### Field of the invention

The present invention generally regards vehicle transporters and in particular it regards a loading deck consisting of removable transverse members.

### State of the art

Such transverse members typically comprise an elongated box-like body, consisting of apertures for the engagement of stop devices of the vehicles transported on the vehicle transporters. The box-like body is provided - at its ends - with projecting members for engagement to the vehicle transporter, respectively fixed and mobile, and the movable engagement member consists of a latch displaceable inside the box-like body of the transverse member from an advanced lock position to a receded unlock position, against the action of thrust elastic means.

A transverse member thus made is described and illustrated in the European patent application n° EP-3345787A1 on behalf of the Applicant.

Document US 2014/248102 A1 discloses the preamble of independent claim 1.

### Summary of the invention

The object of the present invention is to provide a transverse member for loading decks of vehicle transporters capable of guaranteeing high reliability even following an extended use.

A further object of the invention is to provide a transverse member that is particularly robust as well as efficient and flexible to use.

A specific object of the invention is to provide a transverse member for loading decks of vehicle transporters of the type defined above that enables ensuring an optimal safety level against risks of unintentional removal arising from an inadvertent displacement of the latch from the advanced lock position to the receded unlock position.

According to the invention, these objects are mainly attained due to the characteristics defined in claim 1. Further secondary characteristics are indicated in the dependent claims.

### Brief description of the drawings

The invention will now be described in detail with reference to the attached drawings, provided purely by way of non-limiting example, wherein:
- figure 1 is a schematic perspective view of a transverse member for loading decks of vehicle transporters according to a first embodiment of the invention,
- figure 2 is an exploded perspective view of the transverse member of figure 1,
- figure 3 is a perspective view, and in larger scale, of the mobile latch of the transverse member of figures 1 and 2,
- figure 4 is an exploded perspective view of the latch of figure 3,
- figure 5 is a schematic perspective view of a second embodiment of the transverse member for loading decks of vehicle transporters according to the invention,
- figure 6 is an exploded view of figure 5,
- figure 7 shows - in larger scale - a detail of figure 6,
- figure 8 perspectively shows the detail of figure 7 in a first condition or lock condition, and
- figure 9 is a view similar to figure 8 in a second condition or unlock condition.

### Detailed description of the first embodiment of the invention

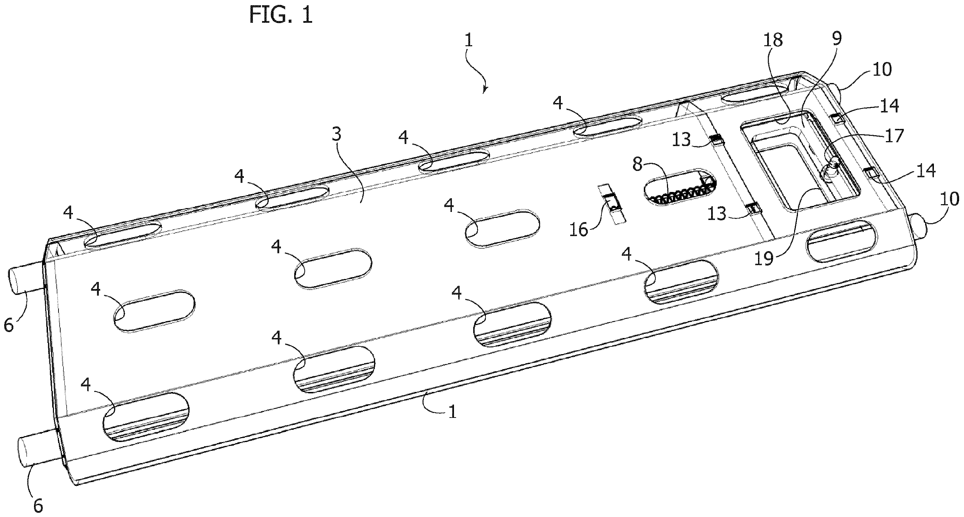

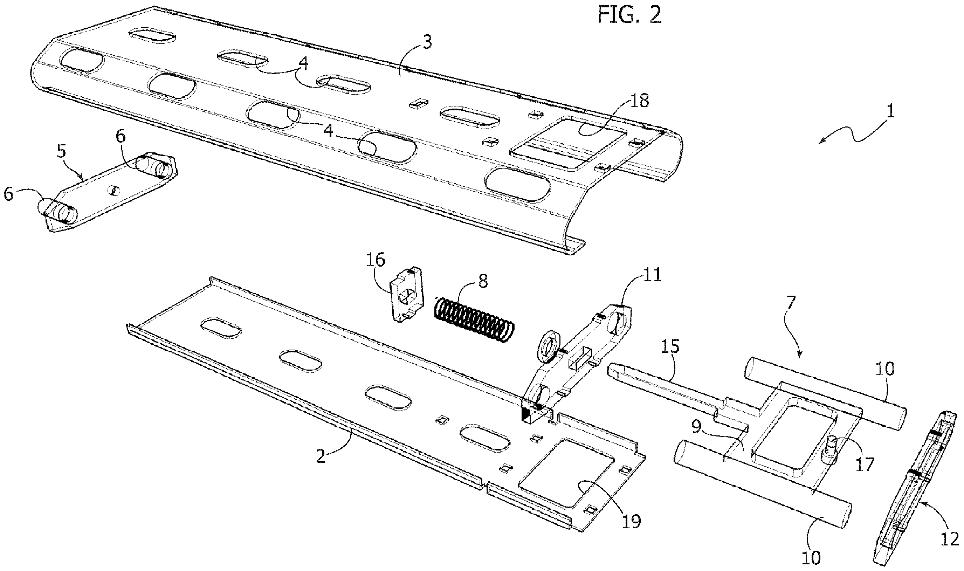

Initially referring to figures 1 to 4 of the drawings, the transverse member according to the first embodiment of the invention, designated to be used to form - with similar transverse members - the loading deck of a vehicle transporter, comprises a robust elongated box-like body 1 formed by a base 2 and an upper wall 3 whose respective longitudinal edges are permanently joined to each other.

The upper wall 3 is formed with slot-like holes 4 for the engagement of hooks for anchoring stop devices for vehicle wheels, per se known and not described in detail.

A fixed engagement member applied transversely to an end of the box-like body 1 of the transverse member and having a pair of projecting longitudinal pins 6 suitable to cooperate with the loading deck of the vehicle transporter is indicated with 5.

On the opposite side, the box-like body 1 contains a movable engagement member indicated in its entirety with 7, displaceable from an advanced lock position to a receded unlock position relatively to the loading deck of the vehicle transporter, against the action of a single compression helical spring 8.

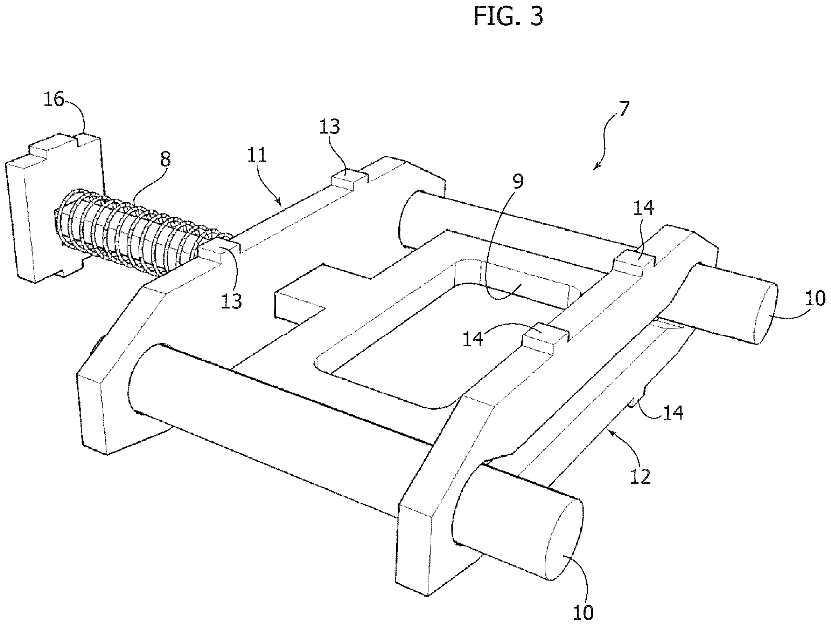

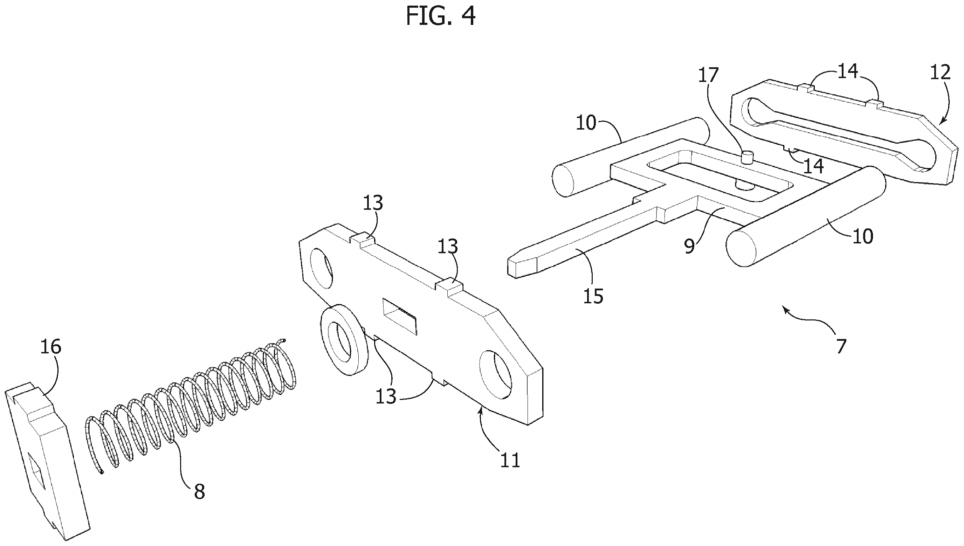

Referring more in detail to figures 3 and 4, the movable engagement member 7 consists of a latch formed by a robust annular quadrangular element 9 at whose opposite lateral edges there are fixed two cylindrical longitudinal pins 10 axially slidable through a first transverse element 11 and a second transverse element 12 spaced apart and anchored, through respective appendages 13, 14, to the walls 2 and 3 of the box-like body 1.

Fixed at the median area of the rear edge of the quadrangular element 9 is a longitudinal rod 15 that traverses the first transverse element 11 and, at its free end, an abutment 16 also fixed to the walls 2, 3 of the box-like body 1. The compression helical spring 8 is wound on the rod 15 and reacts between the transverse guide element 11 and the abutment 16.

The second transverse guide element 12 is positioned at the end of the transverse member opposite to the fixed engagement member 5, so that the pins 10 of the latch 7 project outside the box-like body 1, under the action of the spring 8, in an advanced lock position of the transverse member. The further removal of the latch 7, or the removal thereof from the transverse member, is prevented by a stop 17 for example consisting of a simple screw, suitable to abut against the transverse guide element 12 in the advanced lock position of the latch 7.

The receding of the latch 7 from the advanced lock position to the receded unlock position, against the action of the spring 8, can be easily carried out by accessing to the quadrangular element 9 through respective windows 18, 19 formed in the walls 2, 3 of the box-like body 1.

### Detailed description of the second embodiment of the invention

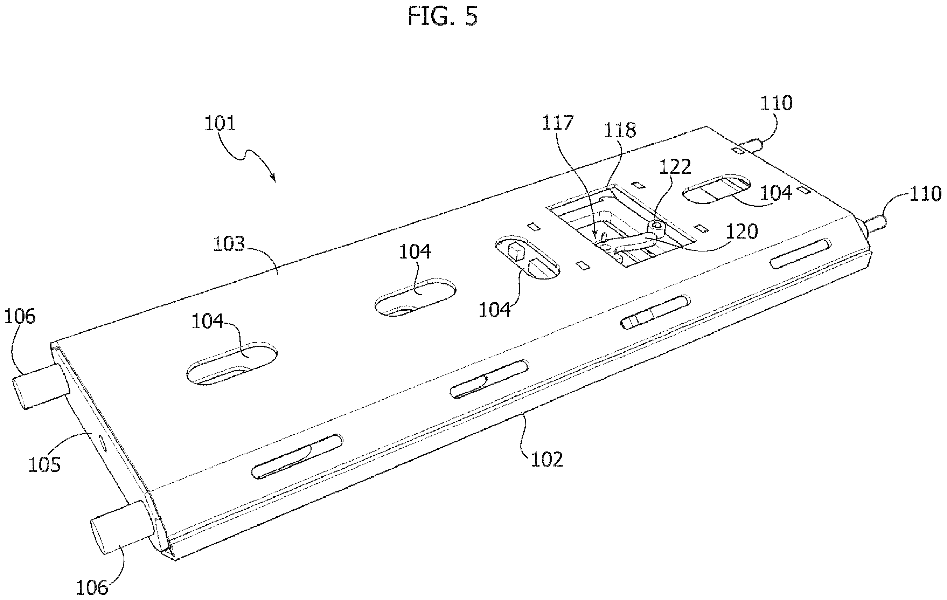

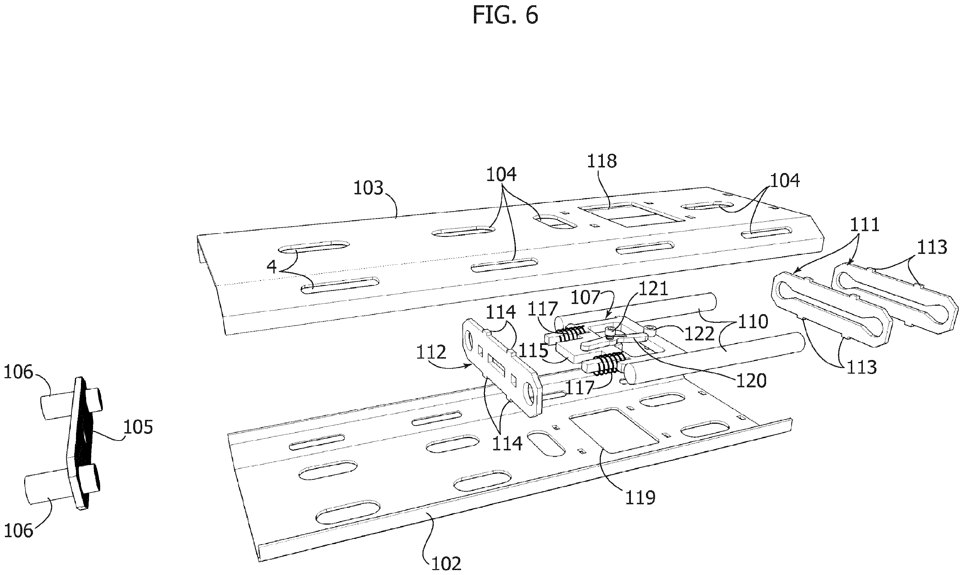

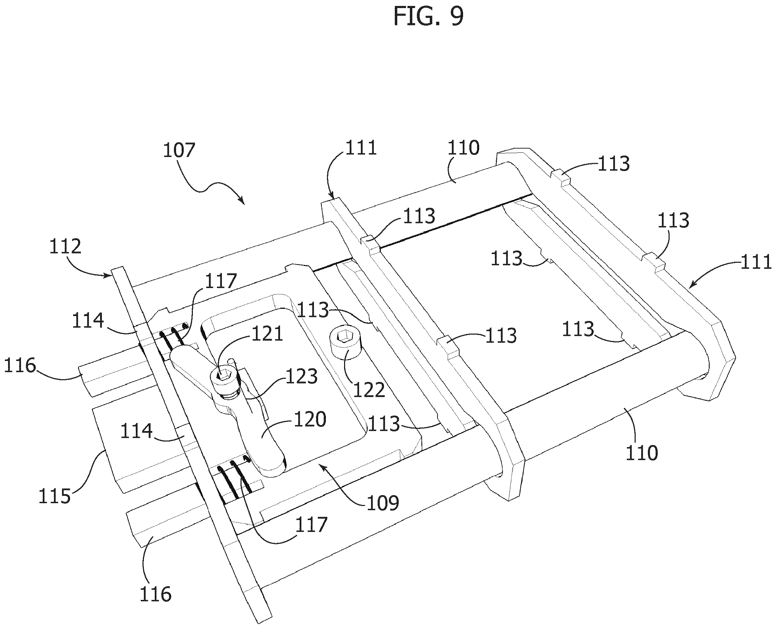

Now, with reference to figures 5 to 9 of the drawings, the second embodiment of the latch according to the invention also comprises a robust elongated box-like body 101 formed by a base or bottom wall 102 and by an upper wall 103 whose respective longitudinal edges are permanently joined to each other, for example by welding.

The walls 102 and 103 are formed with slot-like holes 104 of which those of the upper wall 103 serve for the engagement of hooks for anchoring stop devices for vehicle wheels, per se known and not described in detail.

A fixed engagement member applied transversely to an end of the box-like body 1 of the transverse member and having a pair of projecting longitudinal pins 106 suitable to cooperate with the loading deck of the vehicle transporter, for anchoring an end of the transverse member, is indicated with 105.

On the opposite side, the box-like body 101 contains a movable engagement member indicated in its entirety with 107, which - as observable hereinafter - is displaceable from an advanced lock position to a receded unlock position relatively to the loading deck of the vehicle transporter.

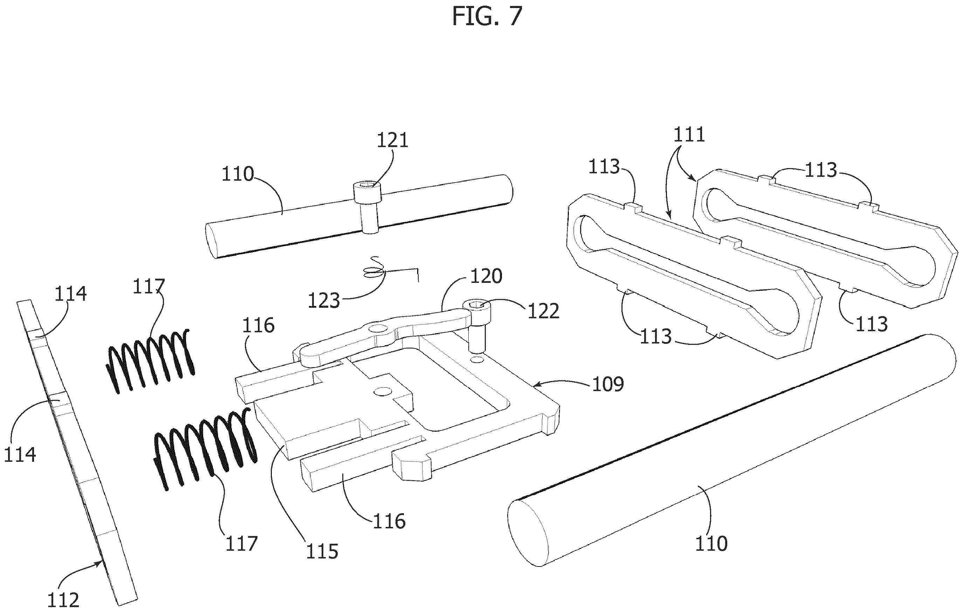

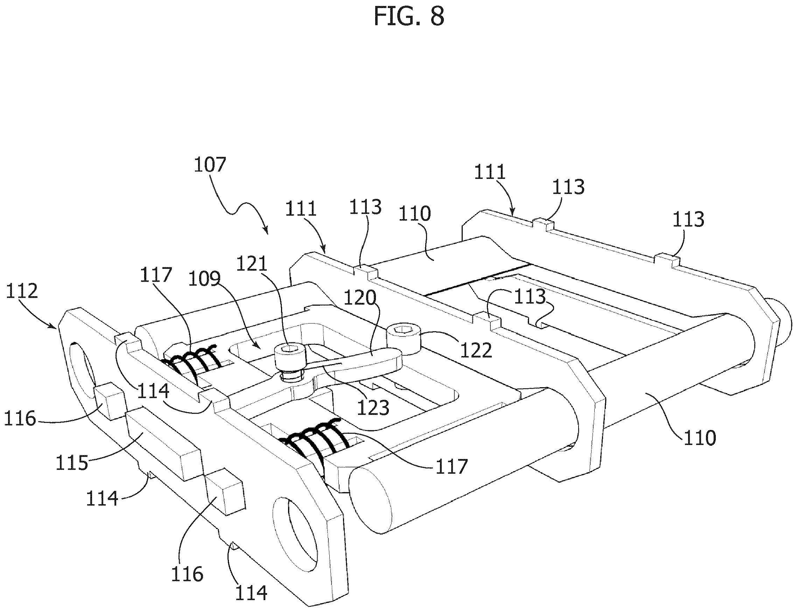

Referring more in detail to figures 7 and 8, the movable engagement member 107 consists in a latch formed by a robust annular quadrangular element 109 at whose opposite lateral edges there are fixed two cylindrical longitudinal pins 110 axially slidable through a first transverse element 111, double in this case, and a second transverse element 112 spaced apart and anchored, through respective appendages 113, 114, to the walls 102 and 103 of the box-like body 101.

Projecting on the rear side of the quadrangular element 109 are a central element 115 and two lateral elements 116 which slidably traverse respective apertures of the second transverse guide element 112. Wound on the two lateral elements 116 are respective compression helical springs 117 which react against the second transverse guide element 112 for keeping the latch 107 in an advanced position in which the ends of its pins 112 project outside the box-like body 101, so as to obtain the lock condition of the transverse member relatively to the deck of the vehicle transporter.

The latch 107 can be receded, with the aim of releasing the transverse member from the deck of the vehicle transporter, by operating manually by means of one or the other of two windows 118, 119 respectively formed in the upper wall 103 and in the base 102, up to disengaging the pins 110 from the deck against the action of the springs 117.

In order to make such operation voluntary, or to avoid risks of inadvertent recession of the latch 107 towards the receded unlock position, the invention provides for a manually releasable safety stop, consisting of a swinging lever 120 pivoted on a central area of the quadrangular element 109 around a vertical pin 121. The swinging lever 120 is rotatable between an operative angular position represented in figures 1 to 4, in which it frontally abuts against the second transverse guide element 112, and an inoperative angular position in which it does not interfere with a transverse element 112 and it thus allows the voluntary manual recession of the latch 107 against the action of the springs 117. A pin spring 123 wound on the pin 121 tends to hold the lever 120 stably in the operative angular position.

A stop projecting from the quadrangular element 109 and suitable to abut, in the advanced lock position of the latch 107, against the first transverse guide element 111 is indicated with 122.

Obviously, the construction details and the embodiments may widely vary with respect to what has been described and illustrated, without departing from the scope of protection of the present invention as defined in the claims that follow.

## Claims

1. Transverse member for the loading deck of vehicle transporters, comprising an elongated box-like body (1; 100) formed with apertures (104) for engagement of stop devices for vehicle wheels, **characterised in that** said box-like body (101) is provided at the ends thereof with respectively a fixed and a movable projecting engaging member the movable engaging member (107) consisting of a latch displaceable inside the box-like body (1; 101) from an advanced lock position to a receded unlock position against the action of thrust elastic means (17; 108), wherein the latch (7; 107) consists of a quadrangular element (9; 109) at whose opposite lateral edges there are fixed two cylindrical pins (10, 10; 110, 110) slidable through a first and a second transverse guide element (11, 12; 111, 112) fixed inside the box-like body (1; 101) .

2. Transverse member according to claim 1, **characterised in that** fixed at the median area of the rear edge of the quadrangular element (9) is a longitudinal rod (15) which traverses the first transverse guide element (11) and wound on which is a compression helical spring (8) reacting between said first transverse guide element (11) and an abutment (16) fixed in said box-like body (1), and the median area of the front edge of the quadrangular element (9) bearing a stop (17) suitable to abut against said second transverse guide element (12) in said advanced lock position of the latch (7).

3. Transverse member according to claim 1, **characterised in that** the latch (107) is provided with a safety stop (120) that can be released manually to prevent it from being displaced from the advanced position to the receded position.

4. Transverse member according to claim 3, **characterised in that** said safety stop (20) is accessible from outside through at least one window (18, 19) of the box-like body (1).

5. Transverse member according to claim 4, **characterised in that** the safety stop consists in a swinging lever (120) pivoted on said quadrangular element (109) and rotatable between an operative angular position in which it frontally abuts against said second transverse guide element (112), and an inoperative angular position, a return spring (123) being operatively associated to said swinging lever (120) tending to hold it in said operative position.

6. Transverse member according to claim 5, **characterised in that** projecting from the rear side of said quadrangular element (109) of the latch (107) are a central element (115) and two lateral elements (116) which slidably traverse said second transverse guide element (112), respective compression helical springs (117) reacting against said second transverse guide element (112) being wound on said two lateral elements (116) .

7. Transverse member according claim 5 or 6, **characterised in that** projecting from the front side of said quadrangular element (109) of the latch (107) is a stop (122) which is designed to abut, in said advanced lock position of the latch (107), against said first transverse guide element (111).

## Patentansprüche

1. Querträger für das Ladedeck von Fahrzeugtransportern, umfassend einen länglichen kastenartigen Körper (1; 100), der mit Öffnungen (104) zum Eingriff von Anschlagvorrichtungen für Fahrzeugräder versehen ist, **dadurch gekennzeichnet, dass**
der kastenartige Körper (101) an seinen Enden vorgesehen ist,
mit jeweils einem festen und einem beweglichen vorstehenden Eingriffselement, wobei das bewegliche Eingriffselement (107) aus einem Riegel besteht, der im Inneren des kastenartigen Körpers (1; 101) aus einer vorgeschobenen Verriegelungsposition in eine zurückgezogene Entriegelungsposition gegen die Wirkung von schubelastischen Mitteln (17; 108) verschiebbar ist, wobei
der Riegel (7; 107) aus einem viereckigen Element (9; 109) besteht, an dessen gegenüberliegenden Seitenkanten zwei zylindrische Stifte (10, 10; 110, 110) befestigt sind, die durch ein erstes und ein zweites Querführungselement (11, 12; 111, 112) gleitfähig sind, die im Inneren des kastenartigen Körpers (1; 101) befestigt sind.

2. Querträger nach Anspruch 1, **dadurch**
**gekennzeichnet, dass** im mittleren Bereich der Hinterkante des viereckigen Elements (9) eine Längsstange (15) befestigt ist, die das erste Querführungselement (11) durchquert und auf die eine Druckschraubenfeder (8) gewickelt ist, die zwischen dem ersten Querführungselement (11) und einem in dem kastenförmigen Körper (1) befestigten Widerlager (16) wirkt, und der mittlere Bereich der Vorderkante des viereckigen Elements (9) einen Anschlag (17) trägt, der geeignet ist, in der vorgeschobenen Verriegelungsposition des Riegels (7) gegen das zweite Querführungselement (12) zu stoßen.

3. Querträger nach Anspruch 1,
**dadurch gekennzeichnet, dass** der Riegel (107) mit einem Sicherheitsanschlag (120) versehen ist, der manuell gelöst werden kann, um zu verhindern, dass er von der vorgeschobenen Position in die zurückgezogene Position verschoben wird.

4. Querträger nach Anspruch 3, **dadurch gekennzeichnet, dass** der Sicherheitsanschlag (20) von außen durch mindestens ein Fenster (18, 19) des kastenartigen Körpers (1) zugänglich ist.

5. Querträger nach Anspruch 4, **dadurch**
**gekennzeichnet, dass** der Sicherheitsanschlag aus einem schwenkbaren Hebel (120) besteht, der an dem viereckigen Element (109) angelenkt ist und zwischen einer Betriebswinkelposition, in der er frontal an dem zweiten Querführungselement (112) anliegt, und einer Nichtbetriebswinkelposition drehbar ist, wobei eine Rückstellfeder (123) dem schwenkbaren Hebel (120) funktionell zugeordnet ist und dazu neigt, ihn in der Betriebsposition zu halten.

6. Querträger nach Anspruch 5, **dadurch**
**gekennzeichnet, dass** von der Rückseite des viereckigen Elements (109) des Riegels (107) ein mittleres Element (115) und zwei seitliche Elemente (116) vorstehen, die das zweite Querführungselement (112) gleitend durchqueren, wobei auf die beiden seitlichen Elemente (116) jeweils Druckschraubenfedern (117) gewickelt sind, die gegen das zweite Querführungselement (112) wirken.

7. Querträger nach Anspruch 5 oder 6, **dadurch gekennzeichnet, dass** von der Vorderseite des viereckigen Elements (109) des Riegels (107) ein Anschlag (122) vorsteht, der dazu bestimmt ist, in der vorgeschobenen Verriegelungsposition des Riegels (107) gegen das erste Querführungselement (111) zu stoßen.

## Revendications

1. Élément transversal pour la plateforme de chargement de transporteurs de véhicules, comprenant un corps allongé en forme de boîte (1 ; 100) formé avec des ouvertures (104) pour la mise en prise des dispositifs d'arrêt pour roues de véhicule, **caractérisé en ce que** ledit corps en forme de boîte (101) est prévu, au niveau de ses extrémités, respectivement avec un élément de mise en prise en saillie fixe et un élément de mise en prise en saillie mobile, l'élément de mise en prise mobile (107) se composant d'un verrou déplaçable à l'intérieur du corps en forme de boîte (1 ; 101) d'une position de blocage avancée à une position de déblocage reculée contre l'action de moyens élastiques de poussée (17 ; 108), dans lequel :
le verrou (7 ; 107) se compose d'un élément quadrangulaire (9 ; 109) auxquels bords latéraux opposés, sont fixées deux broches cylindriques (10, 10 ; 110, 110) pouvant coulisser à travers un premier et un second élément de guidage transversal (11, 12 ; 111, 112) fixé à l'intérieur du corps en forme de boîte (1 ; 101).

2. Élément transversal selon la revendication 1, **caractérisé en ce que**, fixée au niveau de la zone médiane du bord arrière de l'élément quadrangulaire (9), on trouve une tige longitudinale (15) qui traverse le premier élément de guidage transversal (11), et enroulé sur lequel on trouve un ressort hélicoïdal de compression (8) réagissant entre ledit premier élément de guidage transversal (11) et une butée (16) fixée dans ledit corps en forme de boîte (1), et la zone médiane du bord avant de l'élément quadrangulaire (9) supportant une butée (17) appropriée pour venir en butée contre ledit second élément de guidage transversal (12) dans ladite position de blocage avancée du verrou (7).

3. Élément transversal selon la revendication 1, **caractérisé en ce que** le verrou (107) est prévu avec une butée de sécurité (120) qui peut être libérée manuellement pour empêcher son déplacement de la position avancée à la position reculée.

4. Élément transversal selon la revendication 3, **caractérisé en ce que** ladite butée de sécurité (20) est accessible depuis l'extérieur par le biais d'une fenêtre (18, 19) du corps en forme de boîte (1).

5. Élément transversal selon la revendication 4, **caractérisé en ce que** la butée de sécurité se compose d'un levier oscillant (120) pivoté sur ledit élément quadrangulaire (109) et pouvant tourner entre une position angulaire opérationnelle dans laquelle il vient, frontalement, en butée contre ledit second élément de guidage transversal (112), et une position angulaire non opérationnelle, un ressort de rappel (123) étant associé, de manière opérationnelle, audit levier oscillant (120) ayant tendance à le maintenir dans ladite position opérationnelle.

6. Élément transversal selon la revendication 5, **caractérisé en ce que** faisant saillie du côté arrière dudit élément quadrangulaire (109) du verrou (107), on trouve un élément central (115) et deux éléments latéraux (116) qui traversent, de manière coulissante, ledit second élément de guidage transversal (112), les ressorts hélicoïdaux de compression (117) respectifs réagissant contre ledit second élément de guidage transversal (112) en étant enroulés sur lesdits deux éléments latéraux (116).

7. Élément transversal selon la revendication 5 ou 6, **caractérisé en ce que**, faisant saillie du côté avant dudit élément quadrangulaire (109) du verrou (107), on trouve une butée (122) qui est conçue pour venir en butée, dans ladite position de blocage avancée du verrou (107), contre ledit premier élément de guidage transversal (111).
